# EUROPÄISCHE PATENTSCHRIFT

(11) **EP 1 647 507 B1**
(45) Veröffentlichungstag und Bekanntmachung des Hinweises auf die Patenterteilung: **26.12.2007**
(21) Anmeldenummer: 05022473.2
(22) Anmeldetag: 14.10.2005
(51) Int. Cl.: B65G 53/52, F16L 21/06, F16L 17/04

(54) **Vorrichtung zur Förderung von Feststoffen in einer Rohrleitung**
Device for conveying solid materials in a pipe
Dispositif de transport de matières solides dans un conduit

(30) Priorität: 18.10.2004 DE 102004050843
(43) Veröffentlichungstag der Anmeldung: 19.04.2006
(60) Teilanmeldung: 07015259.0
(73) Patentinhaber: S.S.T.-Schüttguttechnik GmbH, 86899 Landsberg a. Lech (DE)
(72) Erfinder: Linder, Hermann J., 86938 Schondorf (DE)
(74) Vertreter: Mollekopf, Gerd Willi

(56) Entgegenhaltungen:
- EP-A- 0 918 183
- DE-A1- 2 116 972
- DE-A1- 3 123 931
- FR-A- 1 411 192
- US-A- 3 454 287
- US-A- 3 680 894
- US-A- 4 461 498
- US-A- 4 601 495
- US-A- 5 794 988
- US-B1- 6 450 551

## Beschreibung

Die Erfindung betrifft eine Vorrichtung zum Einspeisen oder Anlegen eines pneumatischen oder hydraulischen Druckmediums in eine Feststoffe fördernde Rohrleitung zur Unterstützung des Feststofftransports in der Rohrleitung, sowie eine Aktivatoranordnung mit einer solchen Vorrichtung.

Aus der DE 21 16 972 A1 ist ein Aktivator für pneumatische Förderanlagen bekannt. Es ist ein längeres Rohrstück mit Flanschen an beiden Enden vorgesehen, bei dem in einem Teilbereich radiale Löcher durch die Rohrwandung zum Einleiten für Druckluft ausgebildet sind. Im Bereich der Löcher durch die Rohrwandung wird eine Manschette aus zwei Halbschalen über dem Rohrleitungsabschnitt montiert. In die Manschette wird Druckluft eingeleitet, die sich in einem Druckluftraum zwischen Manschetteninnenseite und Rohraußenseite ausbreitet und durch die Bohrungen in der Rohrwandung ins Rohrinnere eindringt. Um das Austreten von Feststoffpartikeln durch die Bohrungen zu verhindern, ist die Rohrwandung im Bereich der Bohrungen durch ein Filter abgedeckt.

Die DE 31 23 931 A1 beschreibt eine Vorrichtung zum Einspeisen eines Druckmediums in eine Rohrleitung gemäß dem Oberbegriff des Anspruchs 1. Bei dieser Vorrichtung kann eine vorhandene Rohrleitung in einem vorgegebenen Rohrleitungsabschnitt mehrfach durchbohrt werden, so dass von der Außenseite nach innen Druckluft zuführbar ist. Über dem durchbohrten Abschnitt wird eine Manschette mit zwei Halbschalen aufgeschraubt, die in axiale Richtung durch O-Ringe zur Rohrleitung abgedichtet ist. Auch hier verteilt sich die Druckluft zwischen Stegen in einer Druckkammer zwischen der Manschetteninnenseite und der Rohrleitungsaußenseite. Die Bohrungen in der Rohrwand sind durch ein Filter abgedeckt, das zusätzlich durch eine Lochplatte verstärkt wird. Die Lochplatte wird wiederum in radiale Richtung durch die Stege an der Innenseite der Manschette gestützt.

Bei der Fördereinrichtung der GB 2 266 874 A wird als Förderhilfe bei einem Rohrleitungsabschnitt Druckluft eingeblasen. Zwei beabstandete Rohrenden einer Leitung sind durch eine zylindermantelförmige Düse zum Einleiten der Druckluft miteinander verbunden. Über die Rohrenden und die Düse ist eine Zylindermantelhülse zur Ausrichtung und Stabilisierung der Düse geschoben. An den Stirnflächen der Zylindermantelhülse sind beidseitig zwei Halbringe angeschraubt, die in Nuten greifen, die an den Rohrenden ausgebildet sind. Durch das Anschrauben der Halbringe an die Zylindermantelhülse drücken die Halbringe die Rohrenden axial zueinander, so dass die Stirnseiten der Rohrenden O-Ringe dichtend gegen die Stirnseiten der Düse pressen.

Die DE 100 32 074 C1 beschreibt einen zweimantligen Rohrbogen mit zwei anflanschbaren Enden. Ein Innenbogen verläuft in einem Außenbogen und wird darin über Bolzen zentriert gehalten. Der Außenbogen ist mit Außenhülsen der Flanschenden verschweißt. In den Außenhülsen der Flanschenden sitzen zentriert Innenhülsen. Zum Anflanschen des Rohrbogens an Rohrenden sind an jedem Flanschende Kupplungsnuten vorgesehen.

Die FR-A-1.411.192 beschreibt eine Rohrverbindung, bei der an den beiden zu verbindenden Rohrenden Muffenstücke angeordnet sind. Die Muffen haben im Vergleich zu den Rohrenden einen größeren Innen- und Außendurchmesser. Beim Verbinden der beiden Rohrenden wird ein kurzes Rohrstück in die Muffen mit erweitertem Innendurchmesser eingeschoben. Das Rohrstück legt die Rohrenden radial zueinander fest. Eine zweiteilige Rohrmanschette wird nach dem Zusammenschieben der Rohrenden um die beiden Muffen gelegt und verschraubt. Eine axiale Festlegung erfolgt durch einen verjüngten Querschnitt der Manschette im Bereich des Umfanges der Rohrenden im Anschluss an die Muffen.

Es ist Aufgabe der Erfindung, eine Vorrichtung zum Einspeisen oder Anlegen eines Druckmediums in eine Feststoffe fördernde Rohrleitung, eine Aktivatoranordnung mit einer solchen Vorrichtung sowie Verfahren vorzusehen, die eine einfache Fertigung und Wartung der Vorrichtung oder Aktivatoranordnung ermöglichen.

Diese Aufgabe wird mit den Merkmalen des Anspruchs 1, 7, 12 bzw. 13 gelöst. Vorteilhafte Ausgestaltungen sind Gegenstand von Unteransprüchen.

Bei der Vorrichtung gemäß Anspruch 1 ist eine zumindest zweiteilig zusammensetzbare Rohrmanschette bzw. Rohrhülse oder -muffe vorgesehen, in der ein Rohrstück mit Bohrungen zum Durchleiten eines Druckmediums angeordnet ist. Das Rohrstück ist kürzer als die Länge der Rohrmanschette, so dass beidseitig ein Abschnitt der Rohrmanschetteninnenfläche über das eingesetzte Rohrstück hinausragt. Mit diesen Endabschnitten kann die Rohrmanschette zwei gegenüberliegende Rohrenden verbindend umschließen. Damit kann der innerhalb der Rohrleitung zu fördernde Feststoff von einem Rohrende durch die Manschette hindurch zum nächsten Rohrende befördert werden. Das vor der Montage lose Rohrstück kann als solches unter optimierten Bearbeitungsbedingungen zum Einsatz in der Vorrichtung vorbereitet und mit geeigneten Öffnungen versehen werden. Bei der Bearbeitung ist dabei das vergleichsweise kurze Rohrstück leicht handhabbar, wobei beispielsweise in einem vorhandenen Rohrstück Bohrungen eingebracht werden oder das Rohrstück als Ganzes in einem Spritzguss- oder Gussverfahren unmittelbar mit Öffnungen versehen wird. Das Material des Rohrstücks kann dabei unabhängig von dem Material und den Dimensionen der zu verbindenden Rohrenden gewählt werden. Beispielsweise kann das Rohrstück bei hoher druckmechanischer Belastung im Bereich der Öffnungen eine stärkere Rohrwandung aufweisen als die anschließenden Rohrenden oder aus einem hochfesten oder teilelastischen Material hergestellt sein.

Zum Zusammensetzen der mehrteiligen Rohrmanschette werden die Teile zusammengeschraubt, miteinander verklebt, miteinander verrastet, verklammert, mittels Schnappverbindung gesichert oder dergleichen. Vorteilhaft sind die Teile der Rohrmanschette zueinander abgedichtet, so dass kein Medium in die Rohrverbindung eindringt oder das in den Rohren geführte Medium aus der Manschette austritt. Als Dichtelemente können beispielsweise eine Dichtfolie, ein vorgeformter Dichtgummi, aushärtenden Dichtflüssigkeit, zähflüssige Dichtflüssigkeit, Metalldichtungen, Verklebungen oder dergleichen verwendet werden. Diese sind z.B. zwischen die Anlagenflächen gelegt, an denen die Manschettenteile im zusammengesetzten Zustand aufeinander zu liegen kommen.

Bei einer ganz besonders vorteilhaften Ausgestaltung weist die Rohrmanschette an ihren Enden, beispielsweise an der Innenseite der Rohrenden, jeweils ein Verbindungselement auf, das mit einem Gegenelement an einem Rohrende verbindbar ist. Neben der radialen Klemmung der Rohrenden bei der Montage der Manschette erfolgt damit auch eine axiale Festlegung der Rohrmanschette an beiden Rohrenden, so dass die Anordnung bestehend aus der Vorrichtung und den Rohrenden auch axialen Belastungen standhält. Vorteilhaft wird dabei die Verbindung mittels Formschluss zwischen den Manschettenenden und dem jeweiligen Rohrende hergestellt.

Wie mit dem Verfahren nach Anspruch 12 angegeben, vereinfacht sich mit einer Aktivatoranordnung mit der oben beschriebenen Vorrichtung und den Rohrenden die Wartung erheblich, da das von der Manschette umfasste Rohrstück nach Lösen der Rohrmanschette aus dem Rohrleitungsabschnitt entfernt und an einem geeigneten Reinigungsplatz gereinigt oder einfach ein gereinigtes oder neues Austausch-Rohrstück anstelle des alten Rohrstücks eingesetzt wird. Einerseits verringern sich dadurch die reinen Wartungsintervalle, während derer der Feststofftransport eingestellt werden muss, erheblich, und andererseits kann eine besonders intensive Reinigung auch an normalerweise unzugänglichen Stellen durchgeführt werden, wenn beispielsweise die Förderung auf eine andere Feststoffsubstanz umgestellt wird.

Wie in Anspruch 13 angegeben, eignet sich eine Aktivatoranordnung wie oben angegeben auch zur besonders schnellen Nachrüstung einer bereits vorhandenen Rohrleitung mit dem Aktivator. Ist eine hohe axiale Stabilität gewünscht, werden die durch das Herausschneiden eines Rohrabschnitts entstehenden Rohrenden mit jeweils einem Gegenelement bzw. Flansch versehen, mit dem dann ein Verbindungselement der Manschette zur axialen Festlegung zusammenwirkt.

Zur Erläuterung werden weitere Ausgestaltungen Vorrichtung zum Einspeisen oder Anlegen eines Druckmediums bzw. der Aktivatoranordnung beschrieben, insbesondere dient die Vorrichtung bzw. Aktivatoranordnung zur Verbindung mehrerer Rohrenden miteinander, wobei beispielsweise eines der zu verbindenden Rohrenden der Zufuhranschluss für das einzuleitende Druckmedium ist.

Gemäß Anspruch 11 weist die Rohrmanschette Ausnehmungen entsprechend der Anzahl der zu verbindenden Rohrenden auf, wobei jeweils eine Ausnehmung das Rohrende an dessen Außenumfang bzw. Außenwand umgreift bzw. umfasst. An der Außenwand bzw. am Außenumfang jedes der Rohrenden ist zumindest eine Eintiefung ausgebildet. Die Eintiefung kann auch als Vertiefung bezeichnet werden, bzw. die Vertiefung als Eintiefung, wobei hier die Begriffe 'Eintiefung' und 'Vertiefung' lediglich der Unterscheidung dient, dass die jeweilige Vertiefung bzw. Eintiefung an einem anderen Teil der Anordnung ausgebildet ist (siehe unten). In die Eintiefung greift beim Zusammensetzen der Rohrmanschette über den Rohrenden ein an der Innenseite der Ausnehmung angeordnetes Kopplungselement ein. Oder es wird gemäß der unten beschriebenen Ausgestaltung ein separates Kopplungselement in die Eintiefung eingesetzt und beim Zusammensetzen der Rohrmanschette formschlüssig (bezüglich einer axialen Verschiebung) mit der Rohrmanschette verbunden. Das zumindest eine Kopplungselement kann einteilig mit der Rohrmanschette verbunden sein, an dieser montiert sein oder formschlüssig in diese eingesetzt sein. Kopplungselemente und Rohrmanschette können aus dem gleichen oder aus unterschiedlichem Material ausgebildet sein.

Durch das Kopplungselement wird jeweils eine mechanische Verbindung gegen ein axiales Verschieben des Rohrendes innerhalb der zusammengesetzten Rohrmanschette bewirkt. Die radiale Festlegung der Rohrenden gegenüber der Rohrmanschette erfolgt durch das Umgreifen des Rohrendes durch die Rohrmanschette. Damit ist neben der oder den Eintiefungen an den Rohrenden keine weitere Präparation der Rohrenden erforderlich, um eine mechanisch stabile Festlegung des Rohrendes an der Manschette zu erreichen. In vorteilhafter Ausgestaltung ist das Rohrende ein flanschloses Rohrende, also ein außer der Eintiefung nicht weiter bearbeitetes Rohrendstück. Damit wird es durch die Rohrmanschette ermöglicht, eine bestehende Rohrverbindung beispielsweise zu Wartungszwecken aufzutrennen und anschließend nach dem Einbringen der Eintiefungen an den Rohrenden mittels der Rohrmanschette auf einfache Weise wieder miteinander zu verbinden. Es muss daher am Rohrende kein Saum oder Flansch aufgeschweißt, aufgeklebt oder montiert werden, um eine Verbindung zwischen den Rohrenden herzustellen.

Gemäß einer besonders vorteilhaften Ausgestaltung ist an der Innenseite jeder der Ausnehmungen der Rohrmanschette zumindest eine Vertiefung ausgebildet. In eine der Vertiefungen ist ein oder sind mehrere Kopplungselemente teilweise einsetzbar, wobei die oder das Kopplungselement aus der Vertiefung im eingesetzten Zustand hervorsteht und der hervorstehende Teil zumindest teilweise in die Eintiefung eingreift, wenn die Rohrmanschette zusammengesetzt bzw. montiert ist. Das heißt, wenn das Kopplungselement in die Eintiefung am Rohrende eingesetzt ist, steht das Kopplungselement über den Außenumfang des Rohrendes hervor und die Rohrmanschette mit ihrer Vertiefung wird so über das Rohrende mit dem Kopplungselement aufgesetzt, dass der hervorspringende Teil des Kopplungselements in die Vertiefung der Rohrmanschette zumindest teilweise eingreift.

Die Randbereiche um die Vertiefung und die Eintiefung können im montierten Zustand durch einen Spalt voneinander getrennt sein oder die Randbereiche können spaltlos aufeinander zu liegen kommen, so dass das oder die Kopplungselemente vollständig in der Vertiefung und Eintiefung aufgenommen sind.

Ganz besonders vorteilhaft ist das Kopplungselement ein Seegerring oder als Bogenelement ausgebildet, so dass am Außenumfang des Rohrendes und an der Innenseite einer Ausnehmung für das Rohrende an der Rohrmanschette eine einfach gestaltete Ringnut bzw. Ringnutabschnitte vorgesehen sein können.

Bei einer besonders bevorzugten Ausgestaltung ist am Rohrende ein Schlitz vorgesehen bzw. zumindest zwei gegenüberliegende Schlitze, in die ein Bogenelement als Kopplungselement eingesteckt wird bzw. werden. An der Innenseite der Ausnehmungen ist dann beispielsweise eine umlaufende Nut vorgesehen. Dabei ist das Einbringen von Schlitzen am Rohrende sehr einfach zu bewirken, indem beispielsweise lediglich mit einer Säge bis zu einer gewünschten Tiefe in die Rohrwandung gesägt wird, der Schlitz somit ein einfach herzustellender Sägeschnitt ist. Vorteilhaft geht dabei die Schnitttiefe über die Wandstärke hinaus, so dass an einem Bogensegment am Innendurchmesser des Rohrendes ebenfalls ein Schlitz entsteht. Damit lässt sich ein Bogenelement als Kopplungselement besonders tief in das Rohrende einbringen und eine entsprechend stabile Fixierung der Rohrmanschette am Rohrende erreichen. Ist in diesem Fall der Innenradius des Bogenabschnitts des Kopplungselements an den Innendurchmesser des Rohrendes angepasst, so wird der freie Querschnitt im Rohrende durch das Kopplungselement nicht verkleinert.

Ganz besonders vorteilhaft wird vor dem Zusammensetzen der Rohrmanschette über den Rohrenden ein Dichtelement über das Rohrelement geschoben, so dass das Dichtelement die Dichtwirkung durch Anlage am Außenumfang des jeweiligen Rohrendes und an der Innenseite der zugehörigen Ausnehmung entfaltet. Bezüglich der Verbindungsstelle kann das Dichtelement vor oder hinter dem Kopplungselement angeordnet sein, wobei letzteres besonders vorteilhaft dann erfolgt, wenn die Eintiefung am Rohrende durch die Rohrwand hindurchgeht, so dass mittels der Dichtung nicht nur die Trennstelle zwischen den Rohrenden sondern auch ein Durchbruch durch die Rohrwand abgedichtet wird.

Besonders eignet sich die Aktivator anordnung zur Verbindung bzw. Wiederverbindung von bereits starr installierten Rohren, die nicht mehr gegeneinander verschoben werden sollen. Damit kann eine bestehende Rohrleitung ohne großen Montageaufwand beispielsweise um die Aktivatoranordnung gemäß Anspruch 1 erweitert werden.

In weiterer Ausgestaltung sind die Ausnehmungen zum Umgreifen der zumindest zwei Rohrenden mit unterschiedlichen Durchmessern ausgebildet, so dass zumindest ein Rohr mit einem von den anderen Rohren abweichenden Durchmessern an das eine oder die anderen Rohrenden angeschlossen werden kann.

Unter dem Begriff Rohrende ist hier auch ein Schlauchende zu verstehen, das durch die Ausnehmung der Rohrmanschette greifbar ist, wobei das Schlauchende entweder eine ausreichende Eigenstabilität aufweist, ohne bei Belastung zusammenzufallen, oder in Ausführung in das Schlauchende eine Hülse eingesetzt wird, um das Schlauchende zu stabilisieren. Im letzteren Fall ist vorteilhaft die Eintiefung sowohl in das Schlauchende als auch in die Hülse eingebracht, so dass mittels der Hülse sowohl eine radiale als auch eine axiale Festlegung des Schlauchendes in der Rohrmanschette erfolgt.

Ausführungsbeispiele der Erfindung werden nachfolgend anhand von Figuren näher erläutert. Es zeigen:
- Fig. 1A: einen Querschnitt durch ein Relaiselement, das zwei Rohrenden miteinander verbindet,
- Fig. 1B: eine Seitenansicht der Anordnung von Fig. 1A,
- Fig. 2: eine Seitenansicht in axialer Richtung der Anordnung von Fig. 1A,
- Fig. 3: eine Detailansicht aus der Anordnung von Fig. 1A,
- Fig. 4: eine Explosionsdarstellung der Anordnung von Fig. 1A, und
- Fig. 5: einen Querschnitt durch ein Relaiselement gemäß einer zweiten Ausführungsform,
- Fig. 6: eine Seitenansicht eines Ringbogens der Anordnung von Fig. 5,
- Fig. 7: einen Explosionsdarstellung der Anordnung von Fig. 5,
- Fig. 8: einen Detailausschnitt aus Fig. 5 im Bereich der Verbindung Rohr/Manschette, und
- Fig. 9: einen Querschnitt durch einen Rohrverbinder. Diese Anordnung ist kein Teil der vorliegenden Erfindung.

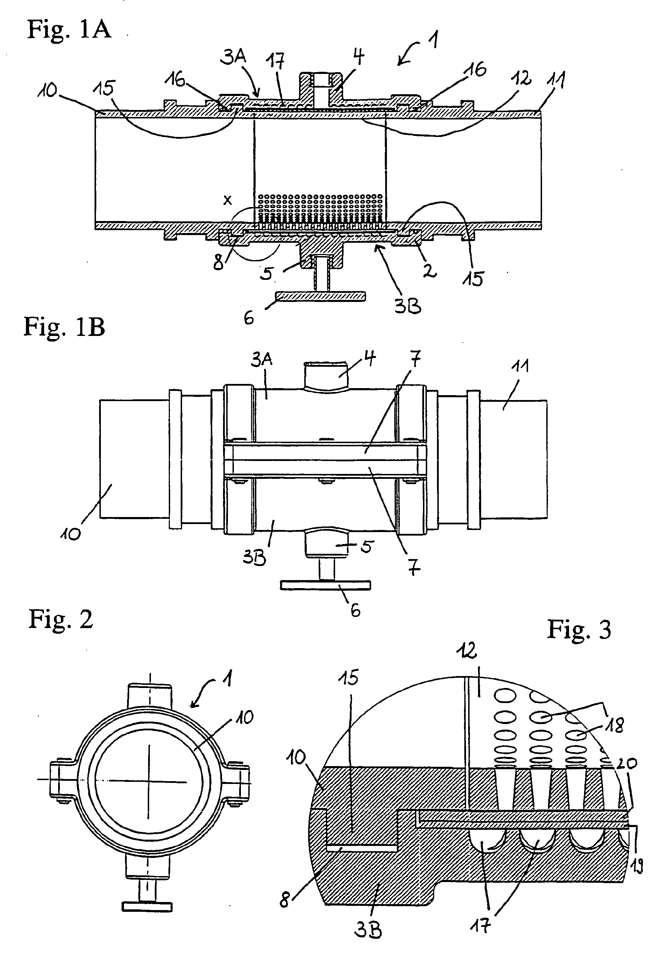

Fig. 1A zeigt eine Querschnittsansicht eines Relaiselements 1 oder Aktivators, der ein erstes Rohrende 10 mit einem zweiten Rohrende 11 verbindet. Das Gehäuse des Relaiselements 1 wird durch eine Manschette bzw. Muffe 2 aus zwei Halbschalen 3A, 3B gebildet. Die erste Halbschale 3A hat einen Druckluftanschluss 4 zum Einschrauben einer Druckluftleitung, durch die Druckluft in das Innere der Manschette 2 eingeleitet wird. Die zweite Halbschale 3B hat eine Konsole 5, an der eine Halterung 6 befestigt wird. Die Halterung 6 stützt den Aufbau mit dem Relaiselement 1 und ist beispielsweise an einer Wand oder Decke montiert.

Zwischen den Stirnseiten ist im Inneren der Manschette 2 ein Innenrohr 12 angeordnet, das an die Stirnflächen des ersten und zweiten Rohrendes 10, 11 anschließt. Wie in der Detailansicht von Fig. 3 dargestellt, sind über den gesamten Umfang des Innenrohrs 12 in radiale Richtung verlaufende Durchgänge 18 ausgebildet. Durch die Durchgänge 18 strömt Druckluft von der Außenseite des Innenrohrs, d.h. von der Innenseite der Manschette 2 her kommend, in das Innere des Innenrohrs 12 und damit in den zwischen den Rohrenden 10, 11 transportierten Feststoff. Je nach Anwendung kann es auch genügen, mittels des angelegten Druckmediums lediglich Druckimpulse durch die Durchgänge 18 auf den Feststoff zu übertragen. Im dargestellten Beispiel sind die Durchgänge 18 konische Bohrungen, deren Durchmesser sich zur Innenseite hin aufweitet. Es können jedoch auch Bohrungen mit konstantem Durchmesser vorgesehen werden, oder Bohrungen, deren Durchmesser sich zur Innenseite hin verjüngt. Bei einer weiteren, nicht dargestellten Ausgestaltung sind die Bohrungen in Förderrichtung geneigt, so dass die zugeführte Druckluft einen zusätzlichen Impuls in Förderrichtung überträgt.

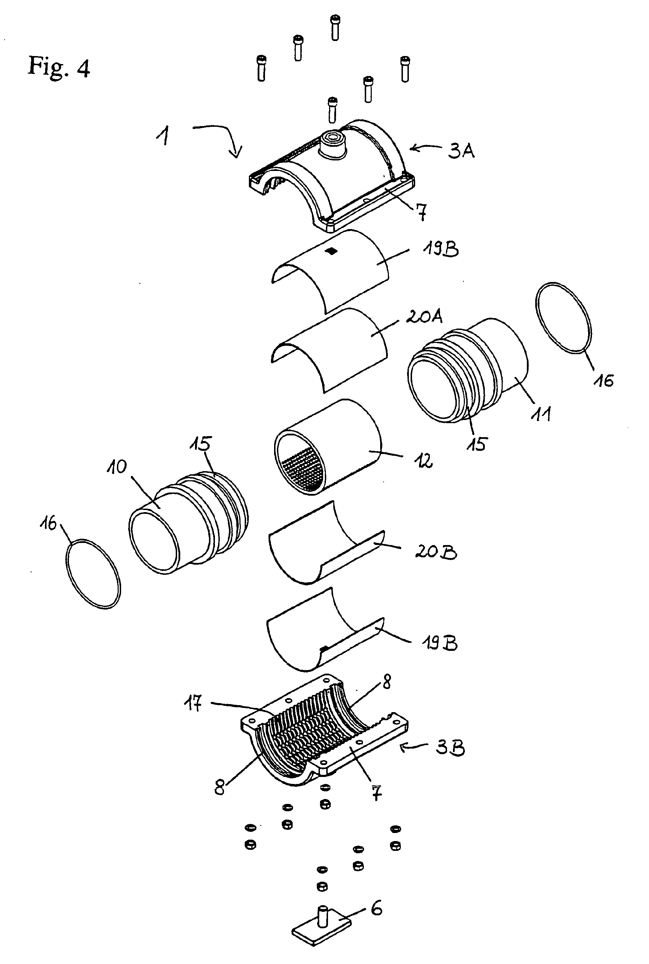

Wie aus der Seitenansicht der Fig. 1B und der Explosionsdarstellung in Fig. 4 ersichtlich, weisen die erste und zweite Halbschale 3A, 3B jeweils an den Schenkelenden Vorsprünge 7 auf, die durch Schrauben gegeneinander verschraubt werden, so dass die Halbschalen der Manschette 2 die Rohrenden 10 und 11 dicht umschließen. Nicht dargestellt sind Dichtelemente an den Stirnflächen der Vorsprünge zum Abdichten der verschraubten Halbschalen gegen ein Austreten des Druckmediums.

An den Rohrenden 10, 11 sind umlaufende Flansche 15 bzw. jeweils ein umlaufender Sims ausgebildet, der durch eine gepaarte, an der Innenseite der ersten und zweiten Halbschale 3A, 3B umlaufenden Ringnut 8 formschlüssig umfasst wird. Durch den Formschluss zwischen dem ersten Rohrende 10 und der Manschette 2 sowie zwischen der Manschette 2 und dem zweiten Rohrende 11 wird eine axiale Verschiebung dieser Elemente zueinander verhindert. Weiterhin ist im Überlappungsbereich zwischen dem äußeren Ende der Manschette 2 und den Rohrenden 10, 11 am Innenumfang der Manschette 2 eine Ringnut ausgebildet, in die jeweils ein O-Ring 16 eingesetzt ist. Der O-Ring 16 verhindert einen Druckverlust vom Rohrleitungsinneren zur Außenseite. Ein oder mehrere O-Ringe können an einer beliebigen Stelle im Überlappungsbereich zwischen der Manschette 2 und dem jeweiligen Rohrende 10, 11 vorgesehen sein. In Abwandlung kann bei ausreichendem Kraftschluss zwischen Manschette und Rohrende 10, 12 auf den Formschluss verzichtet werden, oder der Formschluss zwischen der Manschette 2 und den Rohrenden 10, 11 wird beispielsweise durch lediglich drei axial verlaufende Vorsprünge an der Manschette 2 sowie mit einem Greifelement und einem entsprechend ausgeformten Vorsprung an der Rohraußenseite hergestellt.

Wie in der Detailansicht von Fig. 3 und in der Explosionsdarstellung von Fig. 4 dargestellt, verlaufen in Umfangsrichtung an der Innenseite der Halbschalen 3A, 3B Ringnuten 17, die durch Durchbrüche miteinander in Verbindung stehen. Über die Ringnuten 17 und deren Durchbrüche verbreitet sich die durch den Druckluftanschluss 4 zugeführte Druckluft im Bereich des Innenrohrs 12. Zwischen der Innenseite der Halbschalen 3A, 3B und der Außenseite des Innenrohrs sind von außen her kommend ein Lochblech 19 und ein Filter 20 angeordnet. Diese umschließen, wie in Fig. 4 dargestellt, wiederum als Halbschalen das Innenrohr 12. Es kann aber auch vorgesehen sein, dass das Lochblech und das Filter 20 in Hülsenform oder als Umwicklung um das Innenrohr 12 aufgeschoben und dann montiert werden.

Zur Montage des Relaiselements 1 bzw. des Aktivators in einer Rohrleitung wird die Rohrleitung an der gewünschten Stelle aufgetrennt, ein Rohrleitungsstück entsprechend der Länge des Innenrohrs 12 herausgenommen und die Rohrenden 10, 11 mit dem Flanschansatz 15 versehen. Ein mit den Bohrungen 18 versehenes Innenrohr 12 wird mit dem Lochblech 19 und dem Filter 20 umhüllt und anschließend werden die Halbschalen 3A, 3B der Manschette 2 über dem Innenrohr und den Rohrenden 10, 11 angelegt und verschraubt. Das Innenrohr 12 kann beispielsweise ein aus dem Rohrleitungssystem herausgetrenntes Rohrleitungsstück sein, das nach Bearbeitung (Bohren der Durchgänge 18) wieder verwendet wird. Das Innenrohr 12 kann aus dem gleichen Material wie das anschließende Rohrmaterial sein oder beispielsweise aus einem dickwandigeren Material, das den mechanischen Belastungen besser standhält. Die Flanschansätze 15 bzw. die Simse werden an den Rohrenden 10, 11 aufgeschweißt oder aufgeklebt. Das Rohr kann aus Kunststoff oder Metall sein, wie z.B. aus rostfreiem Edelstahl. Die Manschette kann beispielsweise ein Gussteil sein. Das Filter 20 kann beispielsweise ein Kunststoffgewebe sein, ein Stoffgewebe, ein gesintertes (Keramik- oder Kunststoff-) Material oder dergleichen. Die Feinheit der Poren des Filters liegt in Abhängigkeit des transportierten Feststoffs unterhalb des kleinsten Durchmessers des Feststoffs, beispielsweise unterhalb von 10µm, vorteilhaft zwischen 1 und 2 µm.

Zur Wartung des Relaiselements 1 werden die Halbschalen 3A, 3B gelöst und das Innenrohr mit dem Lochblech 19 und dem Filter 20 wird beispielsweise gegen ein Austauschteil ausgetauscht. Dabei kann beispielsweise auch ein Wechsel gegen ein feinmaschigeres Filtermaterial stattfinden, falls ein feinkörnigerer Feststoff zu transportieren ist.

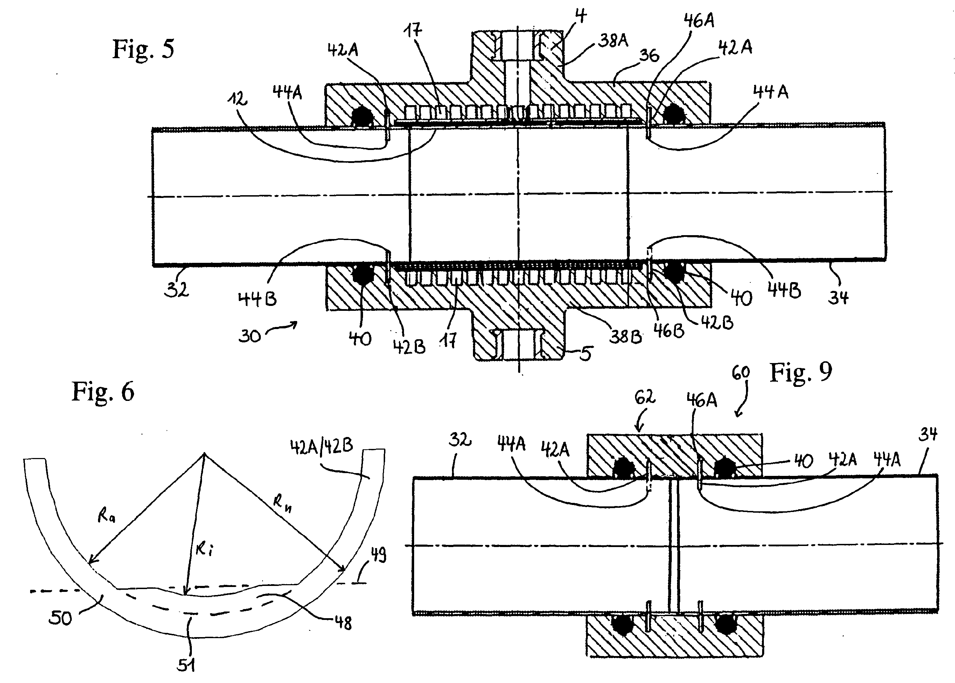

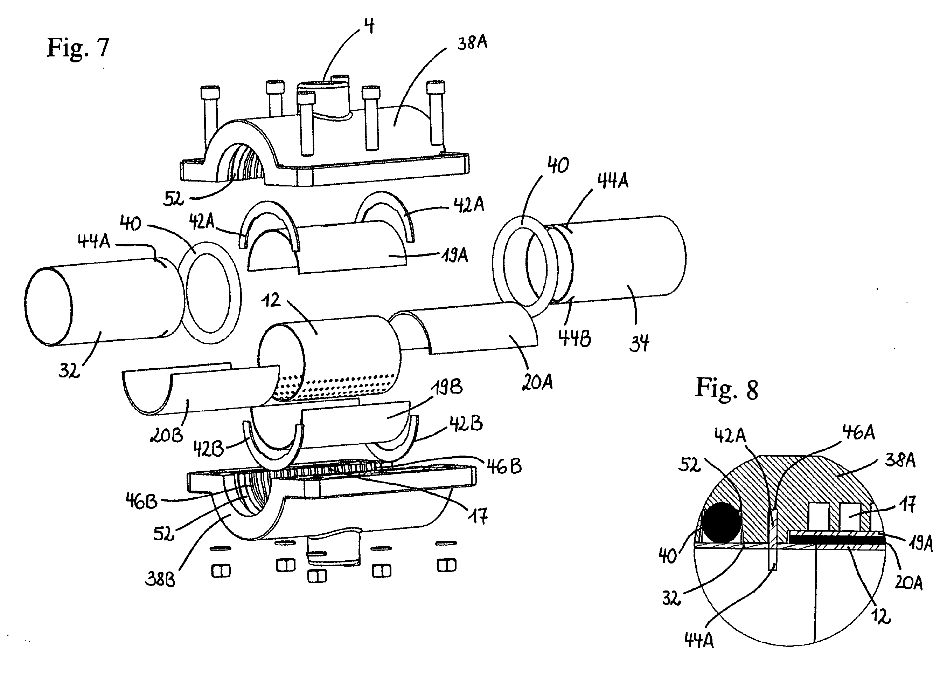

Die Figuren 5 bis 8 zeigen eine Ausgestaltung des in Fig. 1A bis 4 gezeigten Aktivators 1. Fig. 5 zeigt den Aktivator 30 im Querschnitt und Fig. 7 zeigt eine Explosionsdarstellung des Aktivators 30, aus der die Einzelelemente besser ersichtlich sind. Der Innenaufbau des in Fig. 5 dargestellten Aktivators 30 entspricht im wesentlichen dem Innenaufbau des Aktivators 1, so dass auf eine detaillierte Beschreibung hier verzichtet und auf die obigen Ausführungen verwiesen wird. Für gleiche oder gleich wirkende Elemente werden ohne weitere Erläuterung die gleichen Bezugszeichen verwendet. Im wesentlichen unterscheidet sich der Aktivator 30 vom Aktivator 1 durch die Verbindung zwischen den Rohrenden 32, 34 und der Manschette 36. Die Manschette 36 des Aktivators 30 ist ebenfalls aus einer ersten und zweiten Halbschale 38A, 38B zusammengesetzt. Die Manschette 36 verbindet ein erstes Rohrende 32 mit einem zweiten Rohrende 34.

Eine Abdichtung zwischen der Außenseite der Rohrenden 32, 34 und den Halbschalen 38A, 38B erfolgt über einen auf die Außenseite der Rohrenden 32, 34 aufgezogenen O-Ring 40. Der O-Ring wird an den Rohrenden 32, 34 so positioniert, dass er beim Zusammensetzten der Halbschalen 38A, 38B in an der Innenseite der Halbschalen verlaufenden Nuten 52 zu liegen kommt. In axiale Richtung versetzt zu den Stirnflächen aber parallel verlaufend dazu sind an der Ober- und an der Unterseite der Rohrenden 32, 34 ein oberer Schlitz 44A und ein unterer Schlitz 44B ausgebildet. Die Schlitze 44A, 44B werden beispielsweise durch Ansägen der Rohrenden oder durch teilweises Trennschneiden ausgebildet und idealerweise ist der Schlitzboden parallel versetzt zu einer Tangente, die in der Mitte des Schlitzes am Rohrmantel verläuft (vgl. die in Fig. 6 dargestellte Form des Halbrings 42A, B mit der gestrichelten Linie 49).

In den oberen und unteren Schlitz 44A, B werden jeweils ein oberer Halbring 42A und ein unterer Halbring 42B eingesteckt, die in Fig. 6 im Detail in Seitenansicht dargestellt sind. Jeder Halbring ist aus einem Außenbogen 50 und einem kürzeren Innenbogen 48 ausgebildet, wobei der Außenbogen 50 in etwa die Form eines Halbrings hat, während der Innenbogen 48 exakt oder ungefähr der Stirnfläche der Rohrwand entspricht, die den Schlitz 44A bzw. 44B seitlich begrenzt. Mit der gestrichelt dargestellten Linie 49 ist die Bodenebene der Schlitze 44A, 44B in den Rohrenden 32, 34 angedeutet, während der gestrichelte Bogen 51 andeutet, bis zu welcher Tiefe die Halbringe 42A, 42B in die Schlitze 44A, 44B eintauchen. Demnach taucht der Innenbogen 48 vollständig in die Schlitze 44 ein, während der Außenbogen 50 über die Außenfläche der Rohrenden 32, 34 hervorsteht. Der in Fig. 6 dargestellte Radius Rₐ entspricht dem Außenradius der Rohrenden, der Radius Rᵢ entspricht dem Innenradius der Rohrenden und der Radius Rₙ entspricht ungefähr dem größten Radius einer Innennut, wobei die Innennut 46A an der Innenseite der ersten Halbschale 38A und die Innennut 46B an der Innenseite der zweiten Halbschale 38B ausgebildet ist.

Fig. 8 zeigt eine Detailansicht aus der Querschnittdarstellung von Fig. 5, aus der ersichtlich ist, dass der obere Halbring 42A zur Innenseite hin bündig mit der Rohrinnenwand schließt und die Außenseite des Halbrings in der an der Innenseite der ersten Halbschale 38A der Manschette 36 ausgebildeten Innennut 46A liegt.

Nachdem die O-Ringe 40 auf die Rohrenden 32, 34 aufgezogen und die Halbringe 42A, 42B in die entsprechenden Schlitze 44A, 44B an den Rohrenden eingesteckt sind, werden die beiden Halbschalen 38A, 38B aus gegenüberliegenden Richtungen radial zu den Rohrenden aufeinander zubewegt und miteinander verschraubt, wobei die O-Ringe 40 in den Nuten 52 zu liegen kommen und die Halbringe 42A, 42B in den Innennuten 46A und 46B der jeweiligen Halbschale 38A, 38B. Damit erfolgt eine besonders stabile axiale Festlegung der Rohrenden 32, 34 in der Manschette 36. Selbst bei sehr dünnen Halbringen 42A, 42B, d. h. dünnen Schlitzen 44A, 44B, wird aufgrund der gegen eine Abscherung wirkenden Kraft der Halbringe eine ausreichende Stabilität gewährleistet.

Die folgende Ausführungsform ist kein Teil der vorliegenden Erfindung.

Fig. 9 zeigt einen Querschnitt durch einen Rohrverbinder 60, der die Verbindungs- und Dichtelemente 42A, 42B, 44A, 44B, 46A, 46B, 40 und 52 wie der Aktivator 30 aufweist. Eine zweiteilige Manschette 62 des dargestellten Rohrverbinders 60 baut kürzer als die Manschette 36, da der für den Aktivatorbetrieb notwendige Innenaufbau wie Lufteinspeisung, Luftverteilung und Filterung nicht notwendig ist. Wie dargestellt stehen sich die Stirnseiten der Rohrenden 32, 34 mit einem Spalt gegenüber. Die Dimensionierung kann auch so erfolgen, dass die Rohrenden spaltfrei aufeinanderstoßen oder der Spalt durch ein zu den Rohrabmessungen passendes Rohrstück überbrückt ist - ähnlich dem Innenrohr 12, jedoch ohne Durchgänge 18. In weiterer, nicht dargestellter Ausgestaltung kann die Manschette 2, 36 wie dargestellt zwei Aufnahmen für zwei Rohrenden oder lediglich eine Aufnahme für ein Rohrende aufweisen. Eine weitere Aufnahme kann z.B. zur Aufnahme eines Stutzens an einem Behälter ausgebildet sein. Oder die Manschette kann mehr als zwei Aufnahmen zur Aufnahme von mehr als zwei Rohrenden aufweisen.

Die in den Rohrleitungen 10, 11, 12, 32, 34 zu fördernden Medien können förderfähige Feststoffe, Gase, Flüssigkeiten, Hydraulikmedien oder Gemische davon sein, wie Suspensionen, Emulsionen oder dergleichen. In den Aktivator 1, 30 können als Förder- oder Druckmedium Gase, Flüssigkeiten, Hydraulikmedien oder Gemische davon (z.B. Suspensionen, Emulsionen oder dergleichen) eingeleitet werden.

### BEZUGSZEICHENLISTE:

- 1: Relaiselement / Aktivator
- 2: Manschette / Muffe
- 3A, 3B: erste, zweite Halbschale
- 4: Druckluftanschluss
- 5: Konsole
- 6: Halterung
- 7: Vorsprung
- 8: Nut
- 10: erstes Rohrende
- 11: zweites Rohrende
- 12: Innenrohr
- 15: Flansch
- 16: O-Ring
- 17: Ringnut
- 18: Durchgang
- 19: Lochblech
- 20: Filter
- 30: Aktivator
- 32: erstes Rohrende
- 34: zweites Rohrende
- 36: Manschette
- 38A, B: erste, zweite Halbschale
- 40: O-Ring
- 42A: oberer Halbring
- 42B: unterer Halbring
- 44A: oberer Schlitz
- 44B: unterer Schlitz
- 46A: Innennut (Oberschale)
- 46B: Innennut (Unterschale)
- 48: Innenbogen
- 50: Außenbogen
- 52: Nut für O-Ring
- 60: Rohrverbinder
- 62: Verbindungsmanschette

## Patentansprüche

1. Vorrichtung (1; 30) zum Einspeisen oder Anlegen eines Druckmediums in eine Feststoffe fördernde Rohrleitung mit:
einer zumindest zweiteilig zusammensetzbaren Rohrmanschette (2; 36) mit einem Anschluss (4) zum Einleiten des Druckmediums, und
einem von der Rohrmanschette (2; 36) umfassten Rohrstück (12) mit Öffnungen (18) in der Wandung des Rohrstücks (12) zum Einleiten des Druckmediums ins Innere des Rohrstücks (12) einem Zwischenraum zwischen dem Rohrstück (12) und der Innenwand der Rohrmanschette (2; 36),
**dadurch gekennzeichnet,**
**dass** die Länge des Rohrstücks (12) kürzer ist als die axiale Länge der Rohrmanschette (2; 36) und
**dass** die über das innerhalb der Rohrmanschette (2;36) angeordnete Rohrstück (12) hinausragenden Enden der Manschette jeweils über einem Rohrende (10, 11; 32, 34) befestigbar sind.

2. Vorrichtung (1) ach Anspruch 1, wobei an beiden Enden der Rohrmanschette (2) jeweils ein Verbindungselement (8), insbesondere ein Flanschelement, ausgebildet ist, so dass jedes Ende der Manschette (2) mit einem an einem Rohrende (10, 11) ausgebildeten Gegenelement (15) verbindbar ist.

3. Vorrichtung (1) nach Anspruch 2, wobei mit dem Verbindungselement (8) die Manschette (2) gegen eine axiale Verschiebung formschlüssig mit den Rohrenden (10, 11) verbindbar ist.

4. Vorrichtung (1; 30) nach Anspruch 1, 2 oder 3, wobei zumindest über einem Teilbereich der Außenfläche des Rohrstücks (12) ein Feststofffilter (20) und/oder eine Hülle (19) mit einer Vielzahl von Öffnungen, insbesondere ein Gitter oder eine gebogene Lochplatte, angeordnet ist.

5. Vorrichtung (1; 30) nach Anspruch 4, wobei an der Innenseite der Manschette (2; 36) eine Vielzahl von Vorsprüngen und/oder Stegen (17) ausgebildet ist, die am Außenumfang des Feststofffilters (20) oder der Hülle (19) anliegen und zwischen denen sich bei eingesetztem Rohrstück (12) das Druckmedium zwischen Außenseite des Rohrstücks (12) und Innenseite der Manschette (2; 36) ausbreitet.

6. Vorrichtung (1; 30) nach einem der vorhergehenden Ansprüche, wobei je Rohrende (10, 11; 32, 34) zumindest ein Dichtelement (16; 40) zwischen dem Außenumfang des jeweiligen Rohrendes (10, 11; 32, 34) der Innenseite der Rohrmanschette (2; 36) angeordnet ist.

7. Aktivatoranordnung mit einer Vorrichtung (1; 30) nach einem der vorhergehenden Ansprüche und zwei, voneinander beabstandeten Rohrenden (10, 11; 32, 34) wobei die Enden der Manschette (2; 36) am Außenumfang der Rohrenden (10, 11; 32, 34) befestigt sind.

8. Aktivatoranordnung nach Anspruch 7, wobei die Länge des Rohrstücks (12) kürzer oder gleich dem Abstand zwischen den Rohrenden (10, 11; 32, 34) ist.

9. Aktivatoranordnung nach Anspruch 7 oder 8, wobei die Rohrenden (10, 11) jeweils zumindest ein Gegenelement (15) aufweisen, das mit dem an dem jeweiligen Ende der Rohrmanschette (2) ausgebildeten Verbindungselement (8) in Formschluss steht.

10. Aktivatoranordnung nach Anspruch 9, wobei das zumindest eine Gegenelement (15) auf das Rohrende (10, 11) aufgeklebt oder aufgeschweißt ist.

11. Aktivatoranordnung nach einem der Ansprüche 7 bis 9, mit
zumindest zwei an der Innenseite der Rohrmanschette (2; 36) angeordneten Ausnehmungen (8; 46) zum Aufnehmen der zumindest zwei Rohrenden (10, 11; 32, 34) an deren Außenwand,
zumindest einem Kopplungselement (15; 42) je Rohrende (10, 11; 32, 34),
zumindest einer an der Innenseite jeder der Ausnehmungen (8; 46) ausgebildeten Vertiefung zur Aufnahme eines Teils des Kopplungselements oder der Kopplungselement (15; 42); oder wobei das zumindest eine Kopplungselement (15; 42) an der Innenseite der Ausnehmung (3; 46) angeordnet ist, und
zumindest einer an der Außenwand jedes der Rohrenden (10, 11; 32, 34) ausgebildeten Eintiefüng (44) zur Aufnahme eines Teils oder zur vollständigen Aufnahme des Kopplungselements oder der Kopplungselemente (15; 42),
wobei das zumindest eine Kopplungselement (15; 42) bei zusammengesetzter Aktivatoranordnung zwischen der Eintiefung (44) des jeweiligen Rohrendes (10, 11; 32, 34) und der Vertiefung der jeweiligen Ausnehmung (8; 46) gefasst ist.

12. Verfahren zum Warten einer Aktivatoranordnung nach einem der Ansprüche 7 bis 11, wobei
die Rohrmanschette (2; 36) von den Rohrenden (10, 11; 32, 34) abgenommen,
das Rohrstück (12), insbesondere mit dem Feststofffilter (20) und/oder der Hülle (19), zwischen den Rohrenden (10, 11; 32, 34) entfernt,
an einem Reinigungsplatz gereinigt oder gegen ein Austausch-Rohrstück ausgetauscht,
das gereinigte oder ausgetauschte Rohrstück (12) zwischen den Rohrenden (10, 11; 32, 34) eingesetzt, und
die Rohrmanschette (2; 36) über den Rohrenden (10, 11; 32, 34) und dem Rohrstück (12) montiert wird.

13. Verfahren zur Nachrüstung einer Rohrleitung mit einer Aktivatoranordnung nach einem der Ansprüche 7 bis 11, wobei
aus einer Rohrleitung ein Rohrabschnitt mit mindestens der Länge des Rohrstücks (12) herausgetrennt,
das Rohrstück (12), insbesondere mit dem Feststofffilter (20) und/oder der Hülle (19), zwischen den Rohrenden (10, 11; 32, 34) eingesetzt, und
die Rohrmanschette (2; 36) über den Rohrenden (10, 11; 32, 34) und dem Rohrstück (12) montiert wird.

## Claims

1. Device (1; 30) for feeding or applying a pressurizing medium into a solids conveying tube, comprising:
an at least two-part composable tube collar (2; 36) having a connection (4) for feeding the pressurizing medium; and
a tube section (12) encompassed by the tube collar (2; 36) which has openings (18) in the wall of the tube section (12) for feeding the pressurizing medium into the interior of the tube section (12) from a space between the tube section (12) and the inner wall of the tube collar (2; 36);
**characterized in that**
the length of the tube section (12) is shorter than the axial length of the tube collar (2; 36); and
the collar ends protruding over the tube section (12) arranged within the tube collar (2; 36) can each be mounted over a tube end (10, 11; 32, 34).

2. Device (1) according to claim 1, wherein on each of both ends of the tube collar (2) a connection element (8), in particular a flange element, is formed, so that each end of the collar (2) can be connected to a counter element (15) formed on a tube end (10, 11).

3. Device (1) according to claim 2, wherein by means of the connection element (8) the collar (2) can be connected form-fit to the tube ends (10, 11) against an axial displacement.

4. Device (1; 30) according to claim 1, 2 or 3, wherein a solids filter (20) and/or a sheath (19) having a plurality of openings, in particular a grit or a bent perforated plate, is arranged at least over a partial area of the outer surface of the tube section (12).

5. Device (1; 30) according to claim 4, wherein on the inside of the collar (2; 36) a plurality of protrusions and/or noses (17) are formed, which abut to the outer circumference of the solids filter (20) or the sheath (19) and between which, when the tube section (12) is inserted, the pressurizing medium spreads between the outside of the tube section (12) and the inside of the collar (2; 36).

6. Device (1; 30) according to any of the preceding claims, wherein at least one sealing element (16; 40) per each tube end (10, 11; 32, 34) is arranged between the outer circumference of the respective tube end (10, 22; 32, 34) and the inside of the tube collar (2; 36).

7. Activator arrangement having a device (1; 30) according to any of the preceding claims and two tube ends (10, 11; 32, 34) spaced apart from each other, wherein the ends of the collar (2; 36) are mounted to the outer circumference of the tube ends (10, 11; 32, 34).

8. Activator arrangement according to claim 7, wherein the length of the tube section (12) is shorter than or equal to the distance between the tube ends (10, 11; 32, 34).

9. Activator arrangement according to claim 7 or 8, wherein the tube ends (10, 11) each comprise at least one counter element (15) being form-fit with the connection element (8) formed at the respective end of the tube collar (2).

10. Activator arrangement according to claim 9, wherein the at least one counter element (15) is bonded or welded onto the tube end (10, 11).

11. Activator arrangement according to any of claims 7 to 9, comprising:
at least two recesses (8, 46) arranged on the inside of the tube collar (2; 36) for receiving the at least two tube ends (10, 11; 32, 34) at the outer wall thereof,
at least one coupling element (15; 42) per tube end (10, 11; 32, 34);
at least one indentation formed on the inside of each of the recesses (8; 46) for receiving a part of the coupling element or the coupling elements (15; 42); or wherein the at least one coupling element (15; 42) is arranged on the inside of the recess (3; 46); and
at least one recess (44) formed on the outer wall of each of the tube ends (10, 11; 32, 34) for receiving a part of or for completely receiving the coupling element or the coupling elements (15; 42);
wherein, when the activator arrangement is assembled, the at least one coupling element (15; 42) is held between the recess (44) of the respective tube end (10, 11; 32, 34) and the indentation of the respective recess (8;46).

12. Method for maintaining an activator arrangement according to any of claims 7 to 11, wherein:
the tube collar (2; 36) is detached from the tube ends (10, 11; 32, 34);
the tube section (12), in particular with the solids filter (20) and/or the sheath (19), between the tube ends (10, 11; 32, 34) is removed;
is cleaned at a cleaning station or replaced by a replacement tube section;
the cleaned or replaced tube section (12) is inserted between the tube ends (10, 11; 32, 34); and
the tube collar (2; 36) is mounted over the tube ends (10, 11; 32, 34) and the tube section (12).

13. Method for retrofitting a tube with an activator arrangement according to any of claims 7 to 11, wherein
a tube segment having at least the length of the tube section (12) is severed from a tube;
the tube section (12), in particular with the solids filter (20) and/or the sheath (19), is inserted between the tube ends (10, 11; 32, 34); and
the tube collar (2; 36) is mounted over the tube ends (10, 11; 32, 34) and the tube section (12).

## Revendications

1. Dispositif (1 ; 30) pour injecter ou appliquer un fluide sous pression dans une conduite transportant des matières solides avec :
un manchon de tube (2 ; 36) assemblable en au moins deux parties avec un raccord (4) pour l'introduction du fluide sous pression, et
une pièce tubulaire (12) entourée par le manchon de tube (2 ; 36) avec des ouvertures (18) dans la paroi de la pièce tubulaire (12) pour l'introduction du fluide sous pression à l'intérieur de la pièce tubulaire (12) depuis un espace intermédiaire entre la pièce tubulaire (12) et la paroi intérieure du manchon de tube (2 ; 36),
**caractérisé en ce**
**que** la longueur de la pièce tubulaire (12) est plus courte que la longueur axiale du manchon de tube (2 ; 36) et
**que** les extrémités du manchon dépassant de la pièce tubulaire (12) disposée à l'intérieur du manchon de tube (2 ; 36) peuvent être fixées chacune par-dessus une extrémité de tube (10, 11 ; 32, 34).

2. Dispositif (1) selon la revendication 1, dans lequel un élément de liaison (8), en particulier un élément de bride, est formé aux deux extrémités du manchon de tube (2) afin que chaque extrémité du manchon (2) puisse être reliée à un élément complémentaire (15) formé sur une extrémité de tube (10, 11).

3. Dispositif (1) selon la revendication 2, dans lequel le manchon (2) peut être relié par l'élément de liaison (8) aux extrémité de tube (10, 11) par complémentarité de formes pour empêcher un déplacement axial.

4. Dispositif (1 ; 30) selon la revendication 1, 2 ou 3, dans lequel un filtre à matières solides (20) et/ou une enveloppe (19) pourvue d'une pluralité d'ouvertures, en particulier une grille ou une plaque perforée courbe, est disposé(e) au moins sur une partie de la surface extérieure de la pièce tubulaire (12).

5. Dispositif (1 ; 30) selon la revendication 4, dans lequel une pluralité de saillies et/ou de nervures (17) est formée sur le côté intérieur du manchon (2 ; 36), lesquelles s'appliquent sur la circonférence extérieure du filtre à matières solides (20) ou de l'enveloppe (19) et entre lesquelles, lorsque la pièce tubulaire (12) est installée, le fluide sous pression se répand entre le côté extérieur de la pièce tubulaire (12) et le côté intérieur du manchon (2 ; 36).

6. Dispositif (1 ; 30) selon l'une des revendications précédentes, dans lequel, à chaque extrémité de tube (10, 11 ; 32, 34), au moins un élément d'étanchéité (16 ; 40) est disposé entre la circonférence extérieure de l'extrémité de tube (10, 11 ; 32, 34) et le côté intérieur du manchon de tube (2 ; 36).

7. Ensemble activateur avec un dispositif (1 ; 30) selon l'une des revendications précédentes et deux extrémités de tube (10, 11 ; 32, 34) distantes l'une de l'autre, dans lequel les extrémités du manchon (2 ; 36) sont fixées sur la circonférence extérieure des extrémités de tube (10, 11 ; 32, 34).

8. Ensemble activateur selon la revendication 7, dans lequel la longueur de la pièce tubulaire (12) est inférieure ou égale à la distance entre les extrémités de tube (10, 11 ; 32, 34).

9. Ensemble activateur selon la revendication 7 ou 8, dans lequel les extrémités de tube (10, 11) présentent chacune au moins un élément complémentaire (15) qui est en liaison par complémentarité de formes avec l'élément de liaison (8) formé à l'extrémité respective du manchon de tube (2).

10. Ensemble activateur selon la revendication 9, dans lequel l'élément complémentaire (15) au nombre d'au moins un est collé ou soudé sur l'extrémité de tube (10, 11).

11. Ensemble activateur selon l'une des revendications 7 à 9, avec
au moins deux évidements (8 ; 46) disposés sur le côté intérieur du manchon de tube (2; 36) et destinés à recevoir les au moins deux extrémités de tube (10, 11,32, 34) par leur paroi extérieure,
au moins au élément de couplage (15 ; 42) par extrémité de tube (10, 11 ; 32, 34),
au moins un creux formé sur le côté intérieur de chacun des évidements (8 ; 46) et destiné à recevoir une partie de l'élément de couplage ou des éléments de couplage (15 ; 42) ; ou l'élément de couplage (15 ; 42) au nombre d'au moins un étant disposé sur le côté intérieur de l'évidement (8 ; 46), et
au moins un renfoncement (44) formé sur la paroi extérieure de chacune des extrémités de tube (10, 11 ; 32, 34) et destiné à recevoir une partie ou la totalité de l'élément de couplage ou des éléments de couplage (15 ; 42) ;
dans lequel l'élément de couplage (15 ; 42) au nombre d'au moins un est pris entre le renfoncement (44) de l'extrémité de tube (10, 11 ; 32, 34) respective et le creux de l'évidement (8 ; 46) respectif quand l'ensemble activateur est assemblé.

12. Procédé pour entretenir un ensemble activateur selon l'une des revendications 7 à 11, selon lequel
le manchon de tube (2 ; 36) est démonté des extrémités de tube (10, 11 ; 32, 34),
la pièce tubulaire (12), en particulier avec le filtre à matières solides (20) et/ou l'enveloppe (19), est retirée d'entre les extrémités de tube (10, 11 ; 32, 34),
nettoyée à un poste de nettoyage ou remplacée par une pièce tubulaire de rechange,
la pièce tubulaire (12) nettoyée ou remplacée est mise en place entre les extrémités de tube (10, 11 ; 32, 34), et
le manchon de tube (2 ; 36) est monté par-dessus les extrémités de tube (10, 11 ; 32, 34) et la pièce tubulaire (12).

13. Procédé pour équiper ultérieurement une conduite d'un ensemble activateur selon l'une des revendications 7 à 11, selon lequel
une section de tube ayant au moins la longueur de la pièce tubulaire (12) est sectionnée et sortie d'une conduite,
la pièce tubulaire (12), en particulier avec le filtre à matières solides (20) et/ou l'enveloppe (19), est mise en place entre les extrémités de tube (10, 11 ; 32, 34), et
le manchon de tube (2 ; 36) est monté par-dessus les extrémités de tube (10, 11 ; 32, 34) et la pièce tubulaire (12).
